**Europäisches Patentamt**

(19) **European Patent Office**

**Office européen des brevets**

(11) Veröffentlichungsnummer: **0 139 253**

**B1**

(12) # EUROPÄISCHE PATENTSCHRIFT

(45) Veröffentlichungstag der Patentschrift:
**27.04.88**

(51) Int. Cl.⁴: **A 61 C 8/00**

(21) Anmeldenummer: **84111552.0**

(22) Anmeldetag: **19.08.82**

(54) Implantat zur Befestigung eines künstlichen Zahnersatzes.

(30) Priorität: **20.08.81 CH 5375/81**

(43) Veröffentlichungstag der Anmeldung:
**02.05.85 Patentblatt 85/18**

(45) Bekanntmachung des Hinweises auf die Patenterteilung:
**27.04.88 Patentblatt 88/17**

(84) Benannte Vertragsstaaten:
**DE FR GB IT SE**

(56) Entgegenhaltungen:
**FR-A-2 317 904**
**FR-A-2 395 738**
**US-A-2 857 670**
**US-A-4 195 367**

(73) Patentinhaber: **INSTITUT STRAUMANN AG, CH-4437 Waldenburg (CH)**

(72) Erfinder: **Sutter, Franz, Bennwilerstrasse 42, CH-4435 Niederdorf (CH)**

(74) Vertreter: **Eder, Carl E., Patentanwaltsbüro EDER AG Münchensteinerstrasse 2, CH- 4052 Basel (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Implantat gemäss dem Oberbegriff des Anspruchs 1.

Aus der schweizerischen Patentschrift 604 674 bzw. der dieser entsprechenden FR-A-2 317 904 ist ein derartiges Kiefer-Implantat bekannt, das einen hülsenförmigen Sockel mit einem im wesentlichen kreiszylindrischen Mantel und einer diesen einenends abschliessenden Stirnwand aufweist. Der Sockel hängt beider Stirnwand mit einem Pfeiler zusammen und ist an seinem anderen Ende offen. Im Mantel und in dem diesen mit der Stirnwand verbindenden Obergangsteil sind über den Umfang verteilte Bohrungen vorhanden. Der Mantel ist an seiner Aussenfläche ferner noch mit einer schraubenlinienförmig verlaufenden Rippe versehen.

Wenn ein solches Implantat in einem Kiefer eingesetzt ist, muss es, beispielsweise beim Kauen, betrachtliche Kräfte übertragen, und zwar sowohl in Längsrichtung des Pfeilers als auch quer dazu gerichtete Kräfte oder Kraftkomponenten. Insbesondere beim Übertragen von Kräften mit einer grossen quer zur Pfeilerachse gerichteten Komponente können lokal grosse Spannungen im Knochenmaterial erzeugt werden, die die Resorption von Knochenmaterial verursachen oder fördern können. Dies kann vor allem bei Belastungen im unmittelbar an das Einsetzen des Implantats anschliessenden Zeitraum der Fall sein, in dem die Bohrungen im hohlzylindrischen Teil des Sockels noch nicht vom Knochenmaterial durchwachsen sind.

Aus der schweizerischen Patentschrift 618 870 sind Kiefer-Implantate mit einem zwei oder drei hülsenförmige, im wesentlichen kreiszylindrische Teile aufweisenden Sockel und einem Pfeiler bekannt, dessen eines Ende mit dem Sockel verbunden ist und dessen anderes, freies, zum Halten des Zahnersatzes dienendes Ende über die einen Enden der hohlzylindrischen Teile des Sockels hinausragt. Diese Implantate können verhältnismässig grosse Kräfte übertragen, wobei aber auch bei diesen Implantaten, insbesondere bei Belastungen im unmittelbar an das Einsetzen anschliessenden Zeitraum, noch verhältnismässig grosse Spannungen im Knochenmaterial erzeugt werden können. + Aus der US-Patentschrift 4 177 562 sind mehrteilige Kiefer-Implantate mit einem im allgemeinen plättchen- oder quaderförmigen, Hohlräume aufweisenden Sockel, einem lösbar mit diesem verbundenen Pfeiler und Schrauben bekannt. Der Sockel hat eine längliche Form, wobei seine längste Ausdehnung in einer zur Pfeilerachse rechtwinkligen Richtung verläuft. Bei derartigen Implantaten können vor allem dann sehr grosse Spannungen im Knochenmaterial erzeugt werden, wenn etwa beim Kauen Kräfte auf das Implantat ausgeübt werden, die eine grosse, quer zur Pfeilerachse und parallel zur Längsrichtung des Sockels gerichtete Komponente besitzen.

Aus der französischen Offenlegungsschrift 2 385 384 sind Kiefer-Implantate mit einem einen Sockel bildenden Unterteil und einem lösbar mit diesem verbundenen, pfeilerartigen, aus verschiedenen Einzelteilen bestehenden Oberteil bekannt. Der Sockel weist einen zapfenförmigen Teil oder zwei durch einen Steg miteinander verbundene, zapfenförmige Teile auf. Der bzw. jeder zapfenförmige Teil ist an seinem dem Pfeiler abgewandten Ende mit vier Füssen mit nach aussen gerichteten Fussenden versehen. Die Füsse werden nach dem Einsetzen des Sockels in ein in einem Kieferknochen angebrachtes Loch mit einem Werkzeug voneinander weggespreizt, damit sie in das Knochenmaterial eindringen. Auch beim Belasten dieser Implantate können, insbesondere im Bereich der Fussenden, örtlich extrem grosse Spannungen im Knochenmaterial auftreten.

Die US-Patentschrift 2 857 670 offenbart ein mehrteiliges Zahnimplantat mit einem konischen Sockel, der mit einer durchgehenden Gewindebohrung versehen ist. Ein Pfeiler besitzt einen in die Gewindebohrung einschraubbaren Gewindebolzen mit einem pyramidenstumpfförmigen Kopf. Die Wandung des konischen Sockels ist mit drei ringförmigen Rillen, vier Längsrillen, Löchern und radial verschiebbar geführten Stiften versehen.

Bei der Verwendung eines solchen Implantats wird dessen Sockel mitsamt den radial verschiebbaren Stiften aber ohne den Pfeiler in einen Knochen eingesetzt. Danach wird eine Schraube in die Gewindebohrung eingeschraubt, wodurch die Stifte radial nach aussen verschoben werden, sodass die der Schraube abgewandten Enden der Stifte in das Knochenmaterial hineingepresst werden. Nach etwa einem halben Jahr werden dann die Schraube sowie eine ebenfalls noch vorhandene Unterlagsscheibe entfernt und der Pfeiler eingeschraubt.

Die vier Längsrillen ergeben nur eine geringfügige Vergrösserung der Aussenfläche des konischen Sockels. Dementsprechend wird durch die Längsrillen auch die Übertragung von quer zur Sockelachse gerichteten Kräften zwischen dem Sockel und Knochen nur unbedeutend verbessert. Da die Aussenfläche des Sockels zwischen benachbarten Längsrillen sich über Zentriwinkel von nahezu 90° erstreckende, bogenförmige Abschnitte besitzt, ist es auch nicht möglich, den Sockel beim Einsetzen derart einzupressen, dass das Knochenmaterial schon unmittelbar nach dem Einsetzen des Sockels in Bereiche der Längsrillen eingreift. Nun sollen zwar die nach dem Einsetzen des Sockels radial zu dessen Achse in das Knochenmaterial hineingepressten Stifte eine sofortige Verankerung des Sockels ergeben. Da jedoch die Stifte verschiebbar sind und in den sie führenden Löchern ein gewisses Spiel haben müssen, können sie keine vollständige feste Verbindung zwischen dem Sockel und dem Knochen ergeben. Wenn jedoch ein Sockel nicht von Anbeginn an im wesentlichen unbeweglich im Knochen sitzt, wächst der letztere nicht am Implantat an, sondern wird im Gegenteil abgebaut. Zudem erzeugt das Hineindrücken der Stifte in den Knochen in diesem bei den eingepressten Enden der Stifte extrem grosse Spannungen, die ebenfalls einen Abbau vom Knochenmaterial verursachen können. Des weiteren ist die Herstellung, Sterilmachung und Verwendung eines aus derart vielen Teilen bestehenden Implantats aufwendig und kompliziert. Ferner hat das aus der US-Patentschrift 2 857 670 bekannte Implantat noch die Nachteile, dass zum Einsetzen des Sockels verhältnismässig viel Knochenmaterial entfernt werden muss und dass ungefähr die Hälfte der im konischen Sockel vorhandenen Gewindebohrung durch den Gewindebolzen des Pfeilers ausgefüllt wird, sodass höchstens wenig Knochenmaterial in den Hohlraum des Sockels hineinwachsen kann. Da der Durchmesser der Gewindebohrung und die Querschnittabmessungen der in der konischen Wandung des Sockels vorhandenen Löcher im Vergleich zum Aussendurchmesser und zur Wanddicke des Sockels verhältnismässig klein sind, ist es zudem fraglich, ob überhaupt eine ausreichende Blutversorgung von in den Sockel-Hohlraum hineinwachsendem Knochenmaterial möglich wäre. Des weiteren ist der Sockel wegen der im Verhältnis zu seinem Aussen- und Innendurchmesser grossen Wanddicke auch so steif, dass er sich bei elastischen Deformationen des Knochens selbst nicht deformieren kann.

Der Erfindung liegt nun die Aufgabe zugrunde, Nachteile der bekannten Implantate zu beheben und insbesondere ein Implantat zu schaffen, das schon unmittelbar nach dem Einsetzen einigermassen fest im Knochen sitzt und auch beim Auftreten von quer zur Pfeiler-Längsachse gerichteten Kräften eine möglichst gleichmässige Kraftverteilung ergibt.

Diese Aufgabe wird durch ein gemäss dem Oberbegriff des Anspruches I ausgebildetes Implantat gelöst, das nach der Erfindung durch die Merkmale des Anspruchs 1 gekennzeichnet ist.

Zweckmässige Ausgestaltungen des Implantates ergeben sich aus den abhängigen Ansprüchen.

In der Stammanmeldung 82 810 345.7 (Veröffentlichung EP-A-0 073 177) sind Ausführungsbeispiele beschrieben, die zum Teil mit denjenigen in dieser Patentschrift übereinstimmen.

Die Erfindung soll nun anhand in der Zeichnung dargestellter Ausführungsbeispiele erläutert werden. In der Zeichnung zeigen

die Figur 1 eine schaubildliche Darstellung eines Implantates,

die Figur 2 einen quer zur Längsrichtung des Pfeilers gelegten Schnitt entlang der Linie II-II der Figur 1,

die Figur 3 einen Schnitt durch die Mittelachse des Hohlzylinders und die Linie III-III der Figur 1,

die Figur 4 eine Draufsicht auf die Unterseite eines Oberkiefer-Knochens,

die Figur 5 einen schematischen Schnitt durch den in der Figur 4 dargestellten Knochen unmittelbar nach dem Einsetzen des Implantates,

die Figur 6 einen der Figur 5 entsprechenden Schnitt, aber nachdem der Knochen nachgewachsen ist,

die Figur 7 einen Schnitt durch einen andern Teil eines Sockels des in einen Oberkiefer-Knochen eingesetzten Implantates in grösserem Massstab,

die Figur 8 ein Diagramm zur Veranschaulichung der Kraftübertragung an der Umfangsfläche eines zylindrischen Sockelteils, wobei zum Vergleich in der linken Figurenhälfte die Kraft-Verteilung für einen Sockelteil mit einer Rillen aufweisenden Aussenfläche und in der rechten Figurenhälfte zum Vergleich die Kraft-Verteilung für einen Sockelteil mit einer glatt-kreiszylindrischen Aussenfläche eingezeichnet ist,

die Figuren 9 bis 13 schaubildliche Darstellungen von andern Implantat-Varianten,

die Figur 14 eine Variante eines teils in Ansicht teils im Schnitt dargestellten Implantates,

die Figur 15 einen Querschnitt durch das in der Figur 14 dargestellte Implantat,

die Figur 16 einen Längsschnitt durch einen Kiefer mit einem Implantat, dessen Sockel nur einen hohlzylindrischen Teil aufweist, und

die Figur 17 ein Diagramm zur Veranschaulichung der quer zur Achse verschiedenartiger zylindrischer Sockelteile gerichteten Auslenkung der Sockelteile.

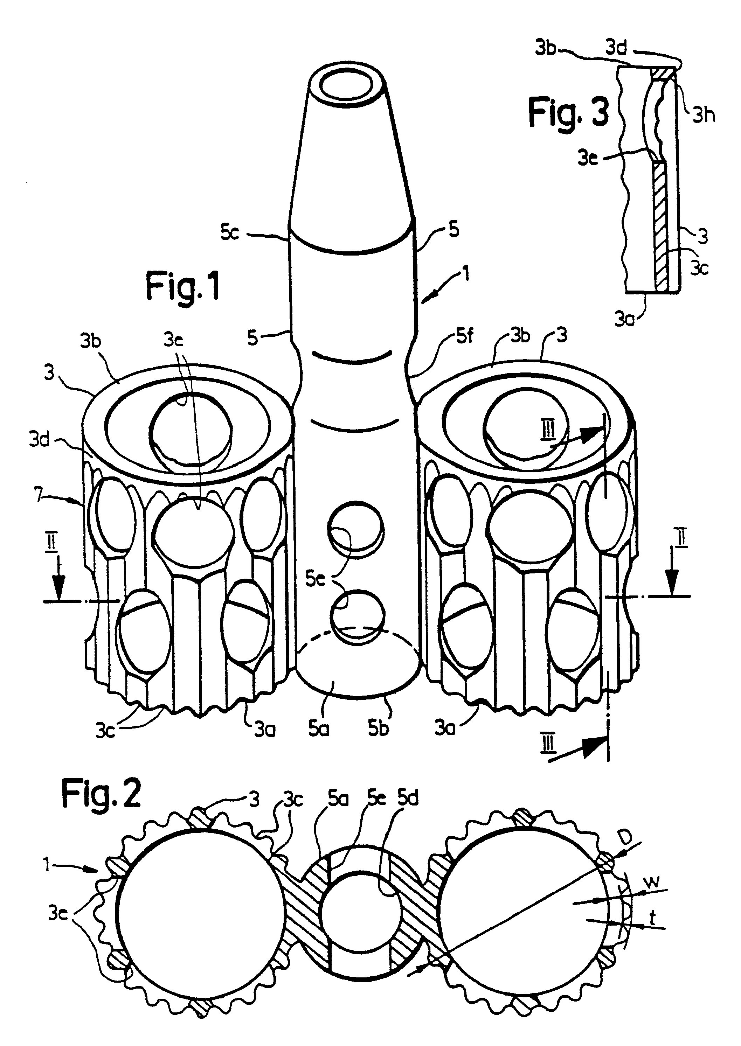

In den Figuren 1 und 2 ist ein als Ganzes mit 1 bezeichnetes Implantat zum Befestigen eines künstlichen Zahnersatzes an einem Kiefer oder genauer gesagt Kiefer-Knochen dargestellt. Das Implantat 1 besteht aus Metall, beispielsweise Titan oder rostfreiem Stahl, und weist zwei hohle, im allgemeinen kreiszylindrische Teile, nämlich Hülsen 3 auf. Diese sind an ihren beiden Enden vollständig offen, so dass sie also ausschliesslich aus einem an seinen beiden Enden durch radiale Endflächen 3a, 3b begrenzten Hülsenmantel bestehen und weder einen Boden noch eine Deckwand aufweisen. Anders gesagt, weisen die Hülsen eine entlang ihrer Mittel- oder Rotationssymmetrieachse verlaufende kreiszylindrische Durchgangsöffnung auf, die durchgehend den gleichen Querschnitt hat.

Ferner ist ein im allgemeinen rotationssymmetrischer Zapfen 5 vorhanden, dessen Mittel-, Rotationssymmetrie- oder Längsachse parallel zu den Rotationssymmetrie-Achsen der Hülsen 3 verläuft und in der gleichen Ebene liegt wie diese. Im übrigen befindet sich der Zapfen 5 in der Mitte zwischen den beiden Hülsen 3. Der Teil 5a des Zapfens 5 ist dabei starr mit den beiden Hülsen 3 verbunden. Das Implantat besteht vorzugsweise aus einem einstückigen Körper. Der Zapfen könnte aber auch mit den Hülsen 3 verschweisst sein. Bei den Verbindungsstellen des Zapfen-Teils 5a mit den Hülsen 3 durchdringen sich die zylindrischen Hüllflächen des Zapfen-Teils 5a und der Hülsen 3 ein wenig oder schmiegen sich mindestens aneinander an. Die Endfläche 5b des Zapfen-Teils 5a ist mit der einen Endfläche 3a der Hülsen 3 bündig. Die beiden hohlzylindrischen Hülsen 3 und der Zapfen-Teil 5a bilden zusammen einen zum Verankern im Kiefer-Knochen bestimmten Sockel 7. Ein Teil des Zapfens 5 ragt über die Endflächen 3b der Hülsen 3 heraus und bildet einen Pfeiler 5c zum Halten eines künstlichen Zahnersatzes.

Die Aussenfläche von jeder Hülse 3 ist mit mindestens zehn, vorzugsweise fünfzehn bis dreissig, und beispielsweise ungefähr zwanzig Rillen 3c versehen, die entlang der Mittel- oder Rotationssymmetrieachse der Hülse 3 und des Zapfens 5 verlaufen und, wenn man von der Verbindungsstelle der Hülsen 3 und des Zapfens 5 absieht, gleichmässig über den Hülsen-Umfang verteilt sind. Die Rillen 3c bilden Vertiefungen und ergeben zusammen mit den sich dazwischen befindenden Stegen, Rippen oder Erhöhungen eine wellenförmige Profilierung. In den rechtwinklig zu der Hülsen-Achsen gelegten Schnitten sind die Rillen 3c, die sich dazwischen befindenden Erhöhungen und die Übergänge zwischen den Rillen und Erhöhungen stetig verrundet. Die Rillen 3c münden in die Endfläche 3a der Hülsen 3, erstrecken sich dagegen nicht ganz bis zur andern Endfläche 3b. Wie man aus der Figur 3 ersehen kann, werden die Rillen 3c kurz vor der Endfläche 3b durch nach aussen in die kreiszylindrische Hüllfläche laufende, gebogene Endflächen 3h begrenzt. Bei dem sich in der Figur 1 oben befindenden Hülsenrand hat also die Aussenfläche des Hülsenmantels zwischen den Enden der Rillen 3c und der Endfläche 3b einen glattzylindrischen, rillenlosen Streifen 3d, dessen Aussendurchmesser gleich dem Durchmesser D der kreiszylindrischen Hüllfläche des die Rillen 3c aufweisenden Abschnittes der Hülsen 3 ist.

Im übrigen sind in den Hülsen 3 eine Anzahl über deren Mäntel verteilter Durchgangslöcher 3e vorhanden. Diese sind durch Bohrungen gebildet, deren Durchmesser grösser als die Breite der Rillen 3c ist und die die Rillen 3c kreuzen und teilweise unterbrechen. Die Löcher 3e können beispielsweise derart auf zwei entlang der Zylinderachsen gegeneinander versetzten Kreisen verteilt sein, dass sich die auf einem Kreis angeordneten Löcher in der Mitte zwischen zwei auf dem anderen Kreis angeordneten Löchern befinden. Dabei sind auf jedem Kreis mindestens drei Löcher 3e, und beispielsweise auf dem einen Kreis drei und auf dem anderen vier Löcher angeordnet. Die beiden stirnseitigen Randabschnitte jeder Hülse 3 hängen dann bei verschiedenen Umfangstellen durch zwischen den Löchern 3e hindurch verlaufende Stege zusammen. Anders gesagt, weist jede Hülse 3 bei mehreren entlang ihrem Umfang gegeneinander versetzten Stellen über die ganze Hülsenlänge zusammenhängende Mantelabschnitte auf. Von diesen verlaufen die die Hülsen 3 mit dem Zapfen 5 verbindenden Mantelabschnitte geradlinig und parallel zu den Hülsenachsen, während die restlichen dieser Mantelabschnitte ungefähr Zickzack- oder Z-förmig zwischen den Löchern 3e hindurch verlaufen.

Die maximalen Aussendurchmesser D und die Längen oder Höhen der Hülsen 3 sind ungefähr gleich gross und betragen zweckmässigerweise mindestens etwa 4 mm und beispielsweise 5 bis 6 mm. Die maximalen Wandstärken w der Hülsenmäntel und damit die radial gemessenen Breiten der Endflächen 3b betragen mindestens 7 % und höchstens 15 %, beispielsweise etwa 10 % des maximalen Aussendurchmessers D der Hülsenmäntel. Die maximalen Wandstärken w der Hülsen 3 betragen beispielsweise mindestens etwa 0,35 mm und höchstens etwa 0,9 mm und beispielsweise 0,5 bis 0,6 mm. Die Längen der Rillen 3c sind 0,1 bis 1 mm kürzer als die Längen oder Höhen der Hülsen 3. Die Tiefe t der Rillen 3c beträgt mindestens 20 %, zweckmässigerweise mindestens 30 und höchstens 70 % und vorzugsweise etwa 35 bis 60 % der Wandstärke w. Die Tiefe t kann beispielsweise etwa 0,1 bis 0,3 mm betragen. Der Abstand benachbarter Rillen beträgt zweckmässigerweise mindestens 0,4 mm und beispielsweise 0,6 bis 0,8 mm und die Rillenbreite beträgt bei der halben Rillentiefe zweckmässigerweise mindestens 0,2 und beispielsweise 0,3 bis 0,4 mm. Im weitern sind die Formen und Abmessungen der Rillen beispielsweise derart festgelegt, dass die durch die Bildung der Rillen 3c verursachte Vergrösserung der Hülsenmantel-Aussenfläche bezüglich einer gelochten, aber rillenlosen Schmiege-Zylinderfläche mindestens 50 %, vorzugsweise mindestens 80 % und beispielsweise ungefähr 80 bis 100 % beträgt.

Der Zapfen-Teil 5a ist mit einer kreiszylindrischen Längsöffnung 5d versehen, die sich von seiner Endfläche 5b bis in die Höhe der Hülsen-Endflächen 3b erstreckt. Der Zapfen-Teil 5a bildet also ebenfalls eine Hülse, die aber nur an ihrem dem Pfeiler 5c abgewandten Ende offen ist. Die Wand des Zapfen-Teils 5a ist im übrigen ebenfalls von Löchern 5e, d.h. Bohrungen durchbrochen. Der Aussendurchmesser des Zapfen-Teils 5a ist auch der grösste Durchmesser des ganzen Zapfens 5 und kleiner als der Hülsen-Durchmesser D und kann beispielsweise 2,5 bis 3,5 mm betragen.

Der Pfeiler 5c kann in der Nähe der Hülsen-Endfläche 3b mit einer Einschnürung 5f versehen sein, deren Übergänge mit den anschliessenden Abschnitten des Zapfens 5 stetig verrundet sind. Der freie Endabschnitt des Pfeilers 5c verjüngt sich zu seinem Ende hin konisch.

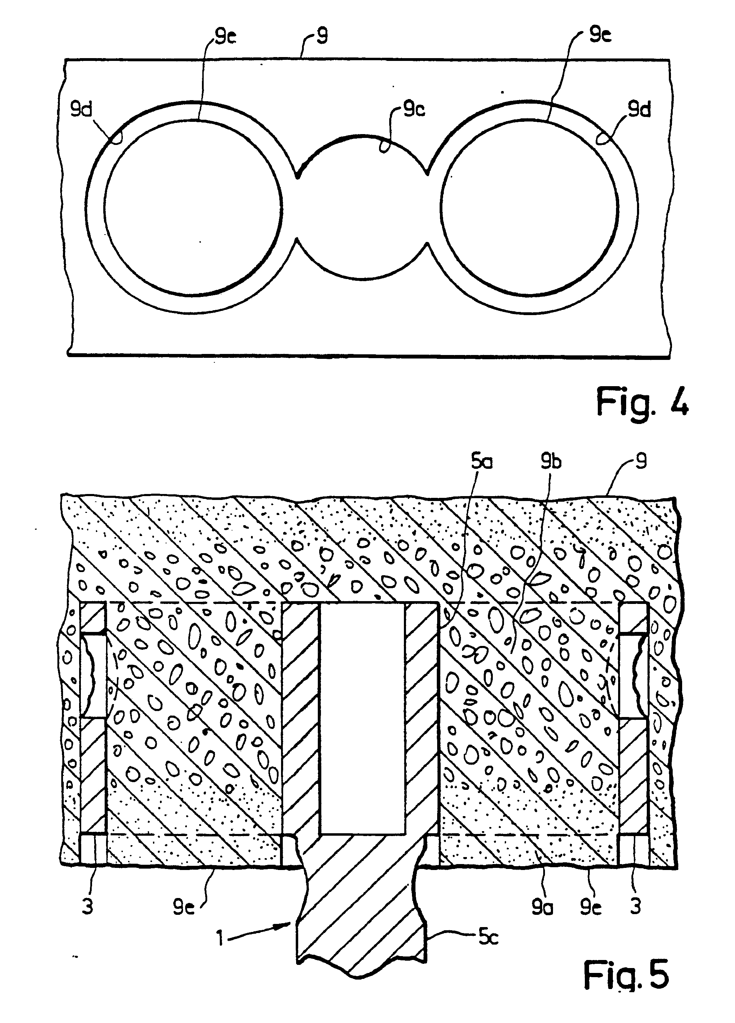

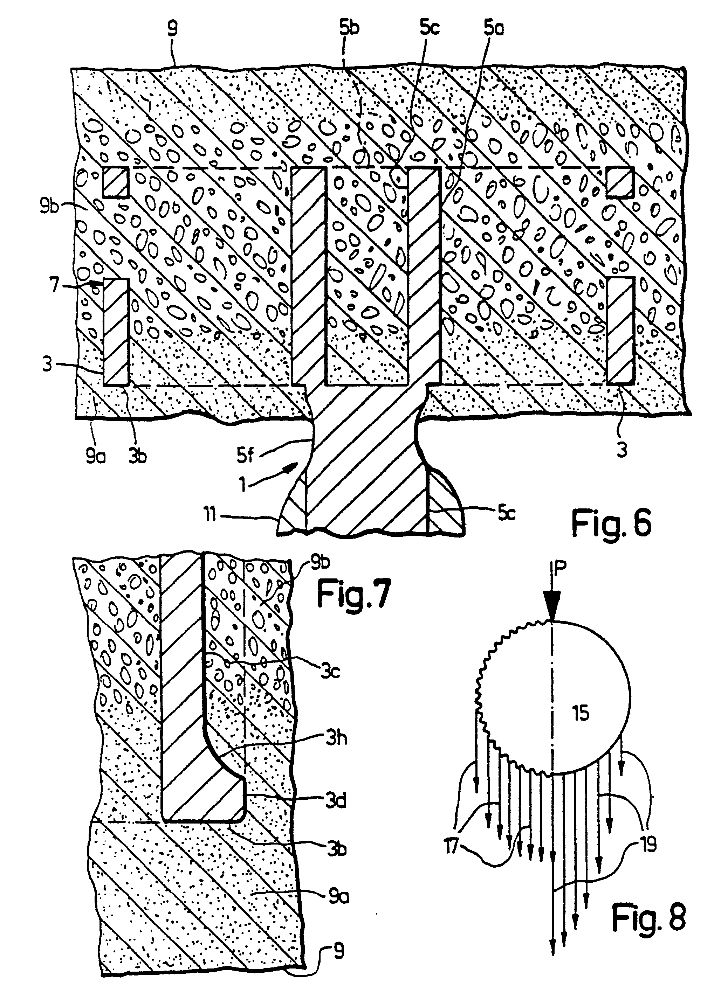

In den Figuren 4, 5 und 6 ist ein Teil eines Oberkiefer-Knochens 9 dargestellt. Beim Oberkiefer-Knochen bildet die verhältnismässig kompakte und stabile Corticalis 9a mindestens in gewissen Bereichen nur eine ziemlich dünne Randzone. Das Innere des Knochens besteht dann aus der relativ lockeren Spongiosa 9b, wobei die beiden Knochenmaterialien in einer Übergangszone mehr oder weniger stetig ineinander übergehen. In den Figuren 5 und 6 wie übrigens auch in der Figur 7, ist die Corticalis durch eine feine Punktierung und die Spongiosa durch eine grobe Körnung dargestellt.

Zum Einsetzen eines Implantates 1 in einen Oberkiefer werden zuerst die nicht dargestellten, weichen Gewebeteile soweit als nötig entfernt und der Oberkiefer-Knochen 9 freigelegt. Danach wird zuerst eine volle Bohrung 9c in den Knochen 9 gebohrt, die nachher zum Aufnehmen des Zapfen-Teils 5a dient und einen dem letzteren entsprechenden Aussendurchmesser aufweist. In diese Bohrung 9c wird eine Lehre eingesetzt. Anschliessend werden mit Hilfe dieser Lehre zwei nachher zum Aufnehmen der Hülsen 3 dienenden Ringnuten 9d in den Knochen 9 gebohrt oder gefräst. Derartige Ringnuten 9d werden in der Chirurgie häufig als Trephine- oder Trepan-Bohrungen bezeichnet. Der Innendurchmesser der Ringnuten 9d ist ungefähr gleich dem Innendurchmesser der Hülsen 3. Der Aussendurchmesser der Ringnuten 9d ist ungefähr gleich dem Hülsen-Aussendurchmesser D und vorzugsweise etwa um die Rillentiefe t kleiner als dieser, so dass die Hülsen 3 zum Einsetzen eingepresst werden müssen und das Knochenmaterial schon beim Einsetzen des Implantates in die Rillen 3c eindringt. Die Tiefe der Ringnuten 9d wird so bemessen, dass die Hülsen 3 vollständig im Knochen 9 versenkt werden können, dass aber die sich in der Nähe der Endflächen 3b befindenden Abschnitte der Hülsen und Rillen 3c mindestens teilweise noch in der Corticalis 9a liegen, wie es besonders deutlich aus der Figur 5 ersichtlich ist.

Wenn das Implantat in den Knochen 9 eingesetzt ist, sind also noch Knochenzapfen 9e vorhanden, die die Innenräume der Hülse 3 durchdringen und ausfüllen und vorzugsweise noch etwas aus diesen herausragen. Das Implantat sitzt schon unmittelbar nach dem Einpressen in den Knochen verhältnismässig starr in diesem fest, wodurch das Anwachsen von Knochenmaterial an das Implantat gefördert wird. Nach dem Einsetzen des Implantates in die im Knochen angebrachten Löcher schliesst das Implantat die inneren und grössten Teile dieser Löcher bei den pfeilerseitigen Rändern der Hülsen 3 annähernd dicht ab. Zu diesem annähernd dichten Abschluss der grössten Teile der Löcher trägt insbesondere auch die Tatsache bei, dass sich die Rillen 3c nicht ganz bis zu den pfeilerseitigen Enden der Hülsen 3 erstrecken, so dass die Hülsen bei diesen Enden nicht nur innen, sondern auch aussen durch eine glatte, kreiszylindrische Fläche begrenzt sind. Dieser praktisch dichte Abschluss der inneren Teile der im Knochen vorhandenen Löcher wirkt einem Eindringen von Mikroorganismen in diese Löcher und damit der Entstehung einer Infektion entgegen.

Nach dem Einsetzen des Implantates 1 wächst das Knochenmaterial durch die Löcher 3e, 5e hindurch sowie auch über die ringförmigen Hülsen-Endflächen 3b. Ferner wächst das Knochenmaterial auch in die Rillen 3c hinein, soweit es nicht bereits beim Einsetzen des Implantates in diese hineingelangt ist. Wenn sich der Knochen regeneriert hat und nachgewachsen ist, ergibt sich dann der in den Figuren 6 und 7 dargestellte Zustand, in dem der Sockel 7 vollständig von Knochenmaterial umschlossen und durchdrungen ist. Zum Überdecken der Hülsen 3 muss nur verhältnismässig wenig Knochenmaterial nachwachsen, nämlich nur gerade soviel, wie zum Überdecken der ringförmigen Endflächen 3b der Hülsenmäntel notwendig ist. Der Implantat-Sockel 7 ist daher nach dem Einsetzen des Implantates in verhältnismässig kurzer Zeit, abgesehen von dem mit dem Pfeiler 5c zusammenhängenden Zapfen-Teil 5a, vollständig von Knochenmaterial überdeckt. Wenn der Knochen die Hülse 3 überwachsen hat, weist er auch in deren Bereichen wieder ungefähr die ursprüngliche Höhe auf. Die Knochenaussenfläche verläuft dann, ohne dass bei den Hülsen eine Senke vorhanden ist, glatt bis zum Zapfen 5. Die Tatsache, dass die Hülsen 3 an beiden Enden vollständig offen sind und dass auch noch ihre Mäntel mit Löchern versehen sind, ermöglicht eine gute Blutversorgung der in den Hohlräumen der Hülsen vorhandenen Knochenteile. Dies wiederum trägt dazu bei, dass diese Knochenteile immer wieder regeneriert und auch bei grossen Belastungen lebend erhalten werden. Im übrigen bilden sich dann auch noch in den Figuren 4 bis 7 nicht dargestellte weiche Gewebeteile, die den Knochen umschliessen und in die Einschnürung 5f hineinwachsen. Am Pfeiler 5c kann dann ein künstlicher Zahnersatz 11, beispielsweise eine Brücke befestigt werden.

Wenn der Knochen 9 auf diese Weise gewissermassen mit dem Sockel 7 verwachsen ist, befinden sich also die bogenförmigen Endflächen 3h der Rillen 3c, wie in der Figur 7 dargestellt, in der Corticalis. Die Endflächen der Rillen 3c tragen daher dazu bei, in der Pfeiler-Längsrichtung vom Pfeiler 5c zum Sockel 7 gerichtete Druckkräfte auf den Knochen zu übertragen, und zwar auf dessen Corticalis, die, wie erwähnt, kompakter und stabiler ist als die Spongiosa.

Die Rillen 3c sind jedoch vorallem auch sehr wichtig für die Übertragung von quer zur Längsachse des Pfeilers 5c gerichteten Kräften. Es soll nun anhand der Figur 8 erläutert werden, wie eine quer zur Rotationssymmetrieachse des Pfeilers 5c, gerichtete Kraft P vom Knochen 9 auf eine Hülse 3 übertragen wird, wenn der Knochen in der vorgängig beschriebenen Weise in die Rillen 3c eingewachsen ist. Die Kraft P sei parallel zu einer Geraden gerichtet, die die Rotationssymmetrieachse der Hülse 3 rechtwinklig schneidet. In der linken Hälfte der Figur 6 ist schematisch der Umriss einer Hülse 3 dargestellt. Die Flanken dieser Rippen bilden nun auch an derjenigen Umfangsstelle, die am weitesten von der Geraden 15 entfernt ist, Flächen, die nicht parallel zur Richtung der Kraft P verlaufen, sondern mit dieser Richtung einen Winkel zwischen etwa 45 und 135° bilden. Dies gewährleistet, dass auch bei den am weitesten von der Geraden 15 entfernten Umfangsstellen noch Kräfte vom Knochen auf die Hülse 3 und umgekehrt übertragen werden. Bei der Übertragung der Kraft P wird die letztere daher in Teilkräfte aufgeteilt, deren Grösse und örtliche Verteilung qualitativ durch Pfeile 17 angedeutet ist. Die zu übertragende Kraft P wird also relativ gleichmässig auf einen grossen Teil des Umfangs der Hülse 3 verteilt. Ferner tragen natürlich auch die Begrenzungsflächen der Löcher 3e, 5e zur Kraftübertragung bei. Daraus resultiert eine relativ gleichmässige örtliche Verteilung der Kräfte und Beanspruchungen des Knochenmaterials.

Wenn die Aussenfläche des Hülsenmantels dagegen eine glatte Zylinderfläche wäre, ergäbe sich die qualitativ in der rechten Hälfte der Figur 8 durch die Pfeile 19 dargestellten Teil-Kräfte. Die relativ weit von der Geraden 15 entfernten Umfangsbereiche der Hülse wären dann für die Übertragung der Kraft P praktisch unwirksam.

Wenn man beim Bohren der Löcher in den Knochen den Aussendurchmesser der Ringnuten 9d, wie erwähnt, ungefähr um eine Rillentiefe t kleiner macht als den Durchmesser D der Hüllflächen der Hülse 3, so tragen die Rillen 3c bereits unmittelbar nach dem Einsetzen des Implantates dazu bei, Kräfte zwischen dem Implantat und dem Knochen zu übertragen. Um den Einfluss der Rillen auf die Übertragung von quer zur Achse einer Hülse 3 gerichteten Kräften quantitativ erfassen zu können, wurden zum Vergleich ein Zylinder mit einer glatten und ein Zylinder mit einer Rillen aufweisenden Aussenfläche in einen künstlichen Knochen aus Kunststoff eingepresst, die Zylinder mit einer quer zu ihrer Achse gerichteten Kraft beaufschlagt und die seitliche Auslenkung der Zylinder gemessen. Beim benutzten künstlichen Knochen handelte es sich um einen Knochen, der ähnliche Festigkeitseigenschaften hat wie die natürliche Spongiosa. Die Messbedingungen entsprechen daher ungefähr den Verhältnissen, wie sie unmittelbar nach der Operation vorhanden sind, wenn ein Implantat in den Knochen eingepresst wurde, aber noch nicht festgewachsen ist. Die Messergebnisse sind in dem in der Figur 17 dargestellten Diagramm wiedergegeben, in dem auf der Abszisse die quer zur Zylinderachse auf die Zylinder ausgeübte Kraft P und auf der Ordinate die quer zur Zylinderachse gerichtete Zylinderauslenkung y, d.h. die Verschiebung des Zylinders aus der Ruhelage, aufgetragen ist. Die obere gestrichelte Kurve des Diagramms zeigt die Auslenkung eines Zylinders mit einer glatten, rillenlosen Mantelfläche, und die untere, mit einer vollen Linie gezeichnete Kurve zeigt die Auslenkung eines Zylinders, dessen Mantelfläche mit ähnlichen Rillen versehen ist wie die Hülsen des Implantates. Wie aus dem Diagramm ersehen werden kann, wird der Rillen aufweisende Zylinder im ganzen Bereich nur ungefähr halb so viel ausgelenkt wie der Zylinder mit der glatten Aussenfläche. Dies belegt, dass die Stabilität der Implantat-Verankerung durch die Rillen beträchtlich verbessert wird.

Die nach der Regeneration des Kochens bei beiden Stirnseiten der Hülsen 3 vorhandenen, aus Knochenmaterial bestehenden Verbindungen zwischen hülseninneren und hülsenäusseren Knochenteilen tragen ebenfalls wesentlich zur Verankerung des Implantates und insbesondere zur Übertragung von quer zu den Hülsenachsen gerichteten Kräften zwischen dem Implantat und dem Knochen bei. Durch die zwischen die Rillen 3c hineinragenden Knochenteile und, wenn der Knochen die Löcher 3e und 5e durchwachsen und die Endfläche 3b überwachsen hat, auch durch die bei diesen Löchern und den Hülsenenden vorhandenen Knochenverbindungen werden bei der Kraftübertragung zwischen dem Implantat und dem Knochen insbesondere auch die bei den Grenzflächen zwischen dem Implantat und dem Knochen auftretenden, tangentialen Schubspannungen reduziert. Dies trägt dazu bei, bei den Grenzflächen einen Abbau von Knochenmaterial zu vermeiden.

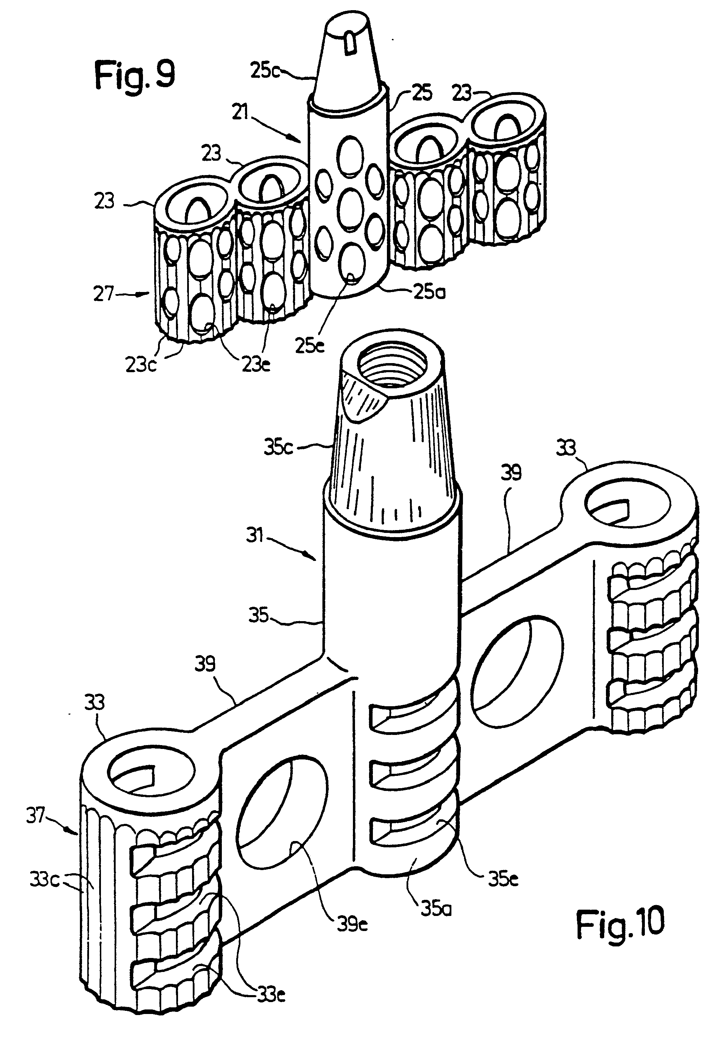

Das in der Figur 9 dargestellte Implantat 21 weist vier hohle, im allgemeinen kreiszylindrische, beidenends offene Hülsen 23 auf, die ähnlich ausgebildet sind wie die Hülsen 3 und insbesondere auch den Rillen 3c entsprechende Rillen 23c sowie Durchgangslöcher 23e aufweisen. Zwischen den beiden mittleren Hülsen 23 befindet sich ein längerer Zapfen 25, dessen einer Teil 25a starr mit den beiden benachbarten Hülsen 23 verbunden ist und mit diesen zusammen den in einem Kiefer verankerbaren Sockel 27 bildet. Die Achsen der Hülsen und des Zapfens 25 liegen dabei alle in der gleichen Ebene. Der Zapfen-Teil 25a hat ungefähr den gleichen Durchmesser wie die Hülsen 23 und ist ebenfalls als Hohlzylinder ausgebildet, der an seinem mit dem einen Hülsenende bündigen Ende offen ist. Ferner ist der Mantel des Zapfen-Teils 25a mit Durchgangslöchern 25e versehen. Der über die Hülsen 23 herausragende Endabschnitt des Zapfens 25 bildet einen Pfeiler 25c zum Halten eines Zahnersatzes.

Das in der Figur 10 dargestellte Implantat 31 weist zwei hohle, im allgemeinen kreiszylindrische, beidenends offene Hülsen 33 auf, die mit den Rillen 3c entsprechenden Rillen 33c versehen sind. Die Mäntel der Hülsen 33 sind mit Löchern 33e in der Form von rechtwinklig zu den Mittelachsen der Hülsen verlaufenden Schlitzen versehen. Ferner ist ein Zapfen 35 vorhanden, der beispielsweise den gleichen Aussendurchmesser hat wie die Hülsen 33 und dessen Teil 35a durch je einen Steg 39 starr mit den Hülsen 33 verbunden ist, so dass die Achsen der Hülsen 33 und des Zapfens 35 parallel zueinander verlaufen und in der gleichen Ebene liegen. Die rechtwinklige zu dieser Ebene gemessene Breite der Stege 39 ist wesentlich kleiner als der Aussendurchmesser der Hülsen 33 und des Zapfens 35 und beträgt höchstens 50 % und beispielsweise ungefähr 30 bis 40 % dieser Aussendurchmesser. Die Hülsen 33, der Zapfen-Teil 35a und die Stege 39 bilden zusammen den zum Verankern in einem Kiefer-Knochen bestimmten Sockel 37. Der Zapfen-Teil 35a ist hohl und sein Mantel ist von Durchgangslöchern 35e durchbrochen, die durch quer zur Stab-Längsachse verlaufende Schlitze gebildet sind. Die Stege 39 sind von je mindestens einem runden Loch 39e durchbrochen. Der über den Sockel 37 vorstehende Teil des Zapfens 35 bildet einen Pfeiler 35c zum Halten eines Zahnersatzes.

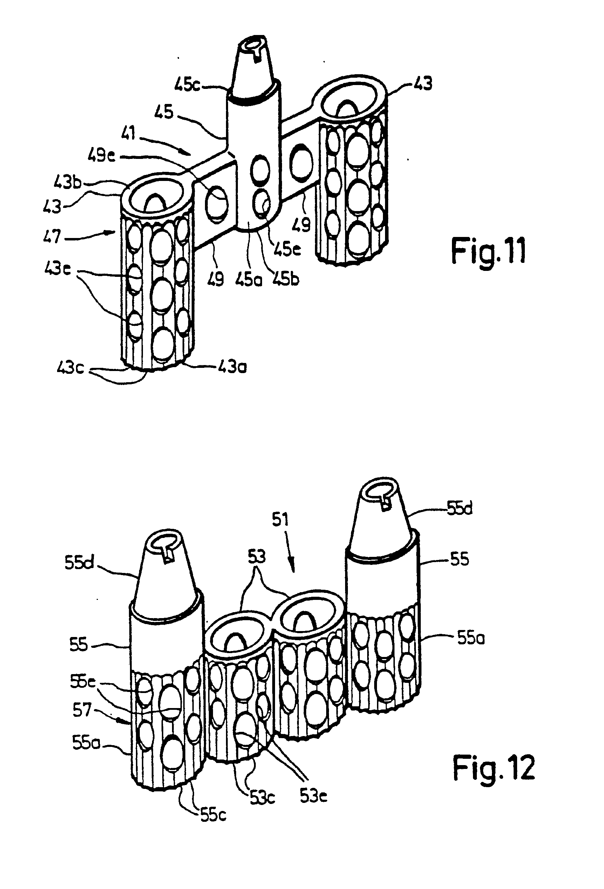

Das in der Figur 11 dargestellte Implantat 41 weist zwei hohle, im allgemeinen kreiszylindrische, beidenends vollständig offene Hülsen 43 mit Endflächen 43a, 43b, Rillen 43c und runden Löchern 43e und einen Zapfen 45 mit einem hohlen Teil 45a auf, der mit runden Löchern 45e versehen und durch zwei ein rundes Loch 49e aufweisende Stege 49 mit den Hülsen 43 verbunden ist. Der Sockel 47 des Implantates 41 besteht also gleich wie der Sockel 37 des Implantates 31 aus zwei Hülsen, einem Zapfen-Teil und zwei Stegen, unterscheidet sich aber vom Sockel 37 insbesondere dadurch, dass die Höhe der Stege 49 kleiner ist als die Höhe oder Länge der Hülse 43. Die Stege 49 erstrecken sich nämlich von den Endflächen 43b der Hülsen 43 aus nur bis ungefähr zur halben Höhe der Hülsen. Die Endfläche 45b des Zapfen-Teils 45a ist bündig mit den sich ungefähr in halber Hülsenhöhe befindenden Stegrändern. Der über den Sockel 47 herausragende Teil des Zapfens 45 bildet wiederum einen Pfeiler 45c zum Halten eines Zahnersatzes.

Das in der Figur 12 dargestellte Implantat 51 weist zwei hohle, im allgemeinen kreiszylindrische, beidenends offene Hülsen 53 auf. Ihre Mäntel sind analog wie diejenigen der Hülsen 3 mit Rillen 53c und runden Löchern 53e versehen. Ferner sind zwei Zapfen 55 vorhanden, deren Teile 55a zusammen mit den beiden Hülsen 53 den Sockel 57 des Implantates bilden. Die Rotationssymmetrieachsen der Hülsen 53 und Zapfen 55 verlaufen parallel zueinander und liegen alle in der gleichen Ebene und die beiden Hülsen 53 sind zwischen den beiden Zapfen 55 angeordnet wobei die Hülsen und Zapfen paarweise starr miteinander verbunden sind. Die Zapfen-Teile 55a sind hohlzylindrisch und mit Rillen 55c versehen, die gleich ausgebildet sind und sich bis in die gleichen Höhen erstrecken wie die Rillen 53c. Im übrigen sind die Mäntel der hohlen Zapfen-Teile 55 mit runden Durchgangslöchern 55e versehen. Die über den Sockel 57 herausragenden Zapfen-Teile bilden zwei zum Verankern eines Zahnersatzes dienende Pfeiler 55d.

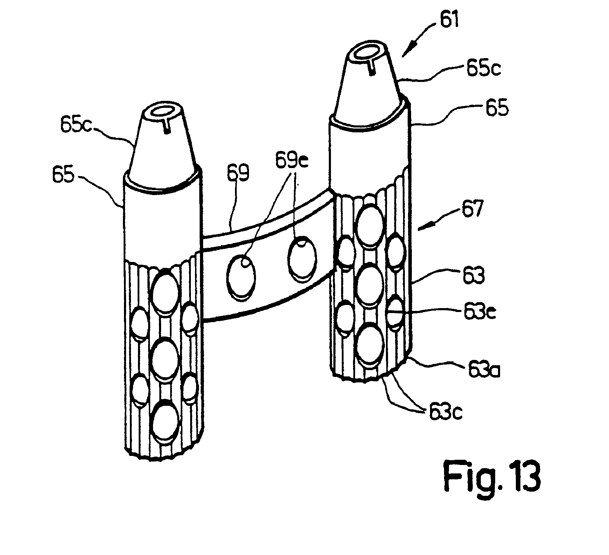

Das in der Figur 13 dargestellte Implantat 61 weist zwei Zapfen 65 auf, deren sich in der Figur 13 unten befindende Teile als hohle, im allgemeinen kreiszylindrische, gegen unten offene Hülsen 63 ausgebildet sind. Diese Hülsen 63 bilden zusammen mit einem sie starr verbindenden Steg 69 den in einem Kiefer-Knochen verankerbaren Sockel 67. Die sich in der Figur 13 oberhalb des Steges 69 befindenden Zapfen-Teile bilden Pfeiler 65c zum Halten eines Zahnersatzes. Die Rotationssymmetrieachsen der beiden Zapfen 65 sind zueinander parallel und liegen in der gleichen Ebene, wogegen der Steg 69 bezüglich dieser Ebene ein wenig gebogen ist. Bei Betrachtung in einer zu den Zapfenachsen parallelen Blickrichtung ist also das ganze Implantat etwas gebogen. Die Aussenfläche jeder Hülse ist mit über den Umfang verteilten Rillen 63c versehen.

Diese erstrecken sich von der Hülsen-Endfläche 63a bis ungefähr in die Höhe des weiter von dieser entfernten Randes des Steges 69 und werden dort durch eine gebogene, nach aussen laufende Endfläche begrenzt. Im übrigen weist die Hülse runde Durchgangslöcher 63e und der Steg runde Durchgangslöcher 69e auf.

Bei den in den Figuren 9, 10, 11, 12 und 13 dargestellten Implantaten sind die beiden äussersten Hülsen verhältnismässig weit voneinander entfernt. Dies erlaubt, die Durchmesser der Hülsen etwas kleiner festzulegen als beim Implantat 1, ohne dass dadurch die Festigkeit der Verankerung beeinträchtigt wird. Beispielsweise kann man bei dem in der Figur 10 dargestellten Implantat 31, wie bereits erwähnt, den Durchmesser der Hülsen 33 etwa gleich gross wie den Durchmesser des Zapfens 35 machen. Diese Durchmesser können dann ohne weiteres kleiner als 4 mm sein und vorzugsweise mindestens 2 mm und beispielsweise ungefähr 2,5 bis 3,5 mm betragen.

Für die in den Figuren 10, 11 und 13 dargestellten Implantate, bei denen der Sockel auch noch mindestens einen Steg aufweist, kann man die zum Aufnehmen der Stege bestimmten Rinnen im Knochen beispielsweise dadurch bilden, dass man eine Reihe einander teilweise überlappender Bohrungen in den Knochen bohrt.

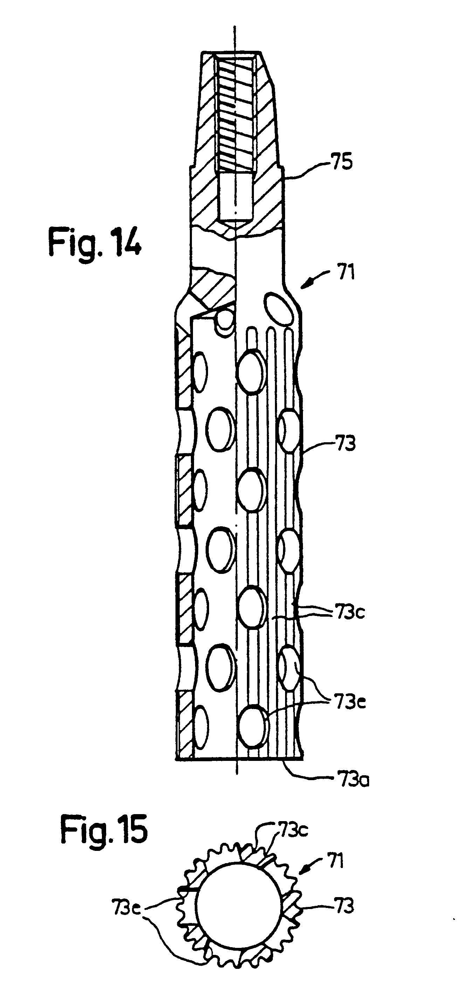

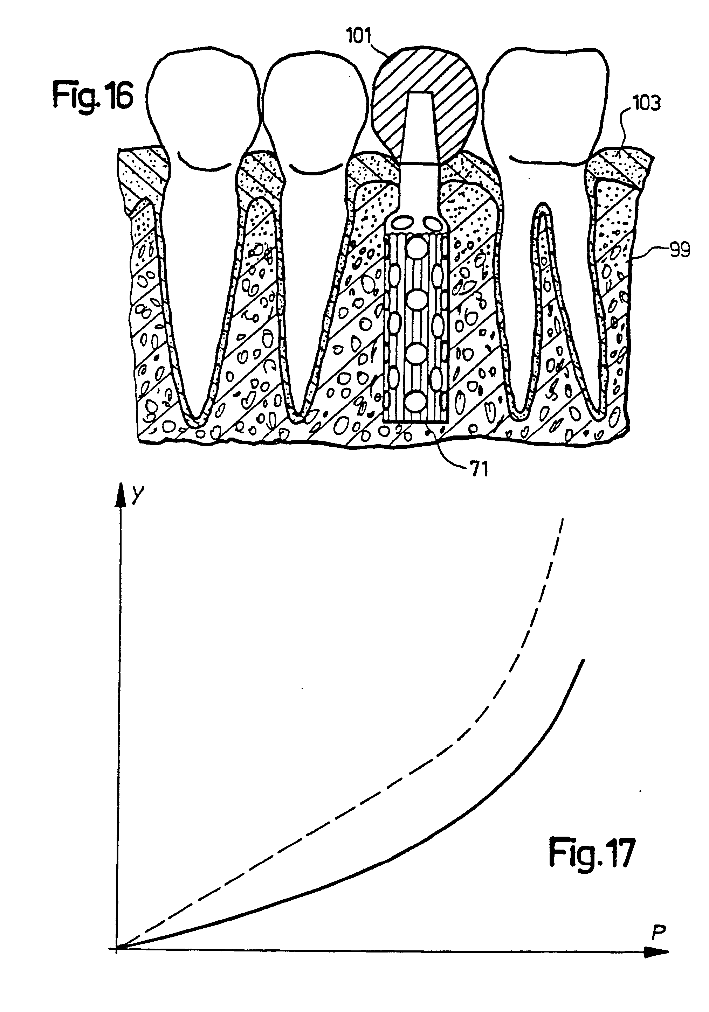

Das in den Figuren 14 und 15 dargestellte Implantat 71 besteht aus einem abgestuften, im allgemeinen rotationssymmetrischen, einstückigen Zapfen. Der sich in der Figur 14 unten befindende, dickere Teil des Zapfens ist durch eine im allgemeinen hohlzylindrische Hülse 73 gebildet und dient als zum Verankern in einem Kiefer bestimmter Sockel. Der restliche Zapfen-Teil bildet den zum Halten des Zahnersatzes dienende Pfeiler 75. Beim Übergang zwischen der Hülse 73 und dem Pfeiler 75 ist eine vorzugsweise verrundete Schulter vorhanden. Die Hülse 73 ist an ihrem dem Pfeiler 75 abgewandten Ende offen, an ihrem pfeilerseitigen Ende jedoch durch den Pfeiler 75 und den schulterförmigen Übergang geschlossen.

Die Aussenfläche des Hülsenmantels ist mit über den Umfang verteilten Rillen 73c versehen. Diese verlaufen parallel zur Rotationssymmetrieachse des Implantates 71 und erstrecken sich von der radialen, ringförmigen Endfläche 73a der Hülse 73 nicht ganz bis zur erwähnten Schulter, wo sie durch gebogene, nach aussen laufende Endflächen begrenzt werden. Im übrigen können die Rillen 73c ähnlich ausgebildet und bemessen sein, wie es für die Rillen 3c erläutert wurde.

Der Mantel der Hülse 73 ist ferner mit Durchgangslöchern 73e, nämlich Bohrungen versehen, wobei auch noch im Bereich der erwähnten Schulter Löcher vorhanden sind. Der Pfeiler 75 ist mit einem als Gewindebohrung ausgebildeten Sackloch versehen.

Wie im Hinblick auf das Implantat 1 anhand der Figuren 5, 6, 7, 8 und 17 erörtert wurde, ergeben die Rillen und Löcher in den Hülsen des Implantat-Sockels eine beträchtliche Verbesserung der Kraftübertragung zwischen Implantat und Knochen. Das Entsprechende gilt natürlich auch für alle anderen in der Zeichnung dargestellten Ausführungsvarianten.

Es sei hierbei darauf hingewiesen, dass die Rillen insbesondere bei dem in den Figuren 14 und 15 dargestellten Implantat 71, dessen Sockel ja ausschliesslich durch eine einzige, im allgemeinen zylindrische, am pfeilerseitigen Ende abgeschlossene Hülse gebildet ist, von grossem Nutzen für die Verankerung sind und dass im wesentlichen alle anhand der Figuren 5, 6, 7 sowie insbesondere 8 und 17 erörterten Wirkungen der Rillen 3c in analoger Weise auch durch die Rillen 73c des Implantates 71 bewirkt werden. Die Rillen und Löcher des Hülsen-Mantels gewährleisten insbesondere auch die Torsionsfestigkeit der Verankerung, d.h. die Sicherung des Implantats gegen Drehungen um seine Längsachse. Wenn der Aussendurchmesser des zum Aufnehmen des Implantates 71 in den Knochen gebohrten Loches, dessen knocheninnerer Teil vorzugsweise durch einen Ringspalt gebildet ist, analog wie es im Hinblick auf das Implantat 1 beschrieben wurde, etwas kleiner gemacht wird als der maximale Hülsen-Aussendruchmesser, ergeben die Rillen schon unmittelbar nach dem Einsetzen des Implantates eine Sicherung gegen Verdrehungen von diesen.

Während die Implantate 1, 21, 31, 51 und 61 vorallem zur Befestigung von Zahnbrücken geeignet sind, kann das nur eine einzige Hülse aufweisende Implantat 71 auch zum Befestigen einzelner, künstlicher Zähne eingesetzt werden. Da die Ausbildung der Kieferknochen und Zähne individuell stark variieren, können Implantate mit unterschiedlichen Sockel-Abmessungen, insbesondere unterschiedliche Hülsen-Längen bereit gestellt werden, so dass ein Zahnarzt oder Chirurg jeweils ein Implantat auswählen kann, das für den individuellen Fall möglichst günstig ist.

In der Figur 16 ist die Anordnung eines Implantates 71 dargestellt. Das Implantat 71 ist in einen Knochen 99, beispielsweise einen Unterkiefer eingesetzt und sein Sockel ragt ungefähr gleich tief in diesen hinein, wie die Wurzeln der sich neben ihm befindenden, natürlichen Zähne. Am Pfeiler des Implantates 71 ist ein vereinfacht dargestellter Zahnersatz, d.h. künstlicher Zahn 101 befestigt. In der Figur 16 ist auch noch das den Knochen 99 überziehende Bindegewebe 103 dargestellt, das den unteren Teil des Pfeilers des Implantates umschliesst. Das Implantat 71 ermöglicht, zwischen natürlichen Zähnen, zwischen denen nur ein einziger natürlicher Zahn fehlt und nur wenig Platz verfügbar ist, einen einzelnen künstlichen Zahn dauerhaft am Kiefer zu befestigen, ohne dass dieser künstliche Lahn in irgend einer Weise zusätzlich von einem natürlichen Zahn gehalten werden muss.

Die verschiedenen beschriebenen Implantate werden zweckmässigerweise aus einem kompakten, d.h. im wesentlichen porenfreien, vorzugsweise aus Titan bestehenden Grundkörper gebildet, auf den durch ein Plasmabeschichtungsverfahren eine dünne, körnige Titanschicht mit einer beispielsweise in der Grösse von 0,01 bis 0,02 mm liegenden Rauheit aufgebracht wird. Dadurch wird die Haftfestigkeit am Knochen zusätzlich verbessert.

Die Zahnimplantate können noch in verschiedener Hinsicht modifiziert werden.

Beispielsweise könnte man bei den Implantaten 1, 21, 31, 41 und 51 die Hülsen und Pfeiler derart versetzen, dass ihre Achsen zwar noch zueinander parallel sind, aber nicht mehr in der gleichen Ebene, sondern in einer gebogenen Fläche liegen.

Ferner könnte der Pfeiler der Implantate bei seiner Verbindung mit dem Sockel eine verrundete Einschnürung aufweisen.

Des weitern könnte man bei den Implantaten 1, 21, 31 und 41 auch noch die zum Sockel gehörenden Zapfen-Teile 5a, 25a, 35a, 45a mit analog zu den Rillen 3c ausgebildeten Rillen versehen. Ferner könnten bei den Implantaten 31, 41, 61 auch die zum Sockel gehörenden Stege mit parallel zu den Pfeilerachsen verlaufenden und analog zu den Rillen 3c ausgebildeten Rillen versehen werden.

Ferner könnten die Aussenflächen der Längsrillen aufweisenden Hülsen zusätzlich noch mit Rillen versehen werden, die ringförmig oder schraubenlinienförmig um die Hülsen herum verlaufen. Diese zusätzlichen Rillen würden dann die vorhandenen Längsrillen kreuzen und die zwischen diesen vorhanden Stege oder Erhöhungen unterbrechen.

Es bestände auch noch die Möglichkeit, die Innenfläche der Hülsen mit entlang der Rotationssymmetrieachsen der Hülse verlaufenden Rillen zu versehen.

Ferner könnte man eventuell ein Implantat mit einem zentralen Zapfen vorsehen, dessen eines Ende den Pfeiler und dessen anderes Ende eine hohle, zum Sockel gehörende Hülse bildet, von der bei einander diametral gegenüberstehenden Mantelstreifen Flügel wegragen, wobei diese und/oder die Hülse mit Löchern und zur Pfeilerachse parallelen, analog zu den Rillen 3c ausgebildeten Rillen versehen sein könnten. Ein solches Implantat könnte dann eine ähnliche Form besitzen, wie sie das Implantat 31 durch Abschneiden der äusseren Hülsen 33 und Anbringen der genannten Rillen am verbleibenden Zapfen-Teil 35a und/oder an den dann die Flügel bildenden Stegen 39 oder das Implantat 71 durch Anbringen der genannten Flügel erhielte.

## Patentansprüche

1. Implantat (1, 21, 31, 41, 51, 61, 71) zur Befestigung eines künstlichen Zahnersatzes (11, 101) an einem Kiefer-Knochen (9, 99), das einen zum Einsetzen in den letzteren bestimmten Sockel (7, 27, 37, 47, 57, 67, 73) und mindestens einen Pfeiler (5c, 25c, 35c, 45c, 55d, 65c, 75) zum Halten des Zahnersatzes aufweist, wobei der Sockel mindestens einen hohlen, im allgemeinen zylindrischen Teil (3, 23, 33, 43, 53, 63, 73) aufweist, der an seinem dem Pfeiler abgewandten Ende offen ist und dessen Mantel mit Löchern (3e, 23e, 33e, 43e, 53e, 63e, 73e) versehen ist, dadurch gekennzeichnet, dass der hohle, im allgemeinen zylindrische Teil (73) des Sockels bzw. mindestens einer dieser Teile (3, 23, 33, 43, 53, 63) an seiner Aussenfläche mit mindestens zehn über seinen Umfang verteilten Vertiefungen (3c, 23c, 33c, 43c, 53c, 63c, 73c) und/oder Erhöhungen versehen ist, die entlang von zur Achse des Pfeilers (5c, 25c, 35c, 45c, 55d, 65c, 75) parallelen Geraden verlaufen oder angeordnet sind.

2. Implantat nach Anspruch 1, dadurch gekennzeichnet, dass der bzw. jeder mit den Vertiefungen (3c, 23c, 33c, 43c, 53c, 63c, 73c) und/oder Erhöhungen der genannten Art versehene Teil (3, 23, 33, 43, 53, 63, 73) mindestens fünfzehn und beispielsweise höchstens dreissig über seinen Umfang verteilte Vertiefungen bzw. Erhöhungen aufweist.

3. Implantat nach Anspruch 1 oder 2, dadurch gekennzeichnet, dass die maximale Wandstärke (w) des Mantels höchstens 15 % des maximalen Aussendurchmessers (D) des Mantels beträgt.

4. Implantat nach einem der Ansprüche 1 bis 3, dadurch gekennzeichnet, dass die zwischen einer glatten, kreiszylindrischen Schmiegefläche des hohlen, im allgemeinen zylindrischen Teils (3, 23, 33, 43, 53, 63, 73) und der tiefsten Stelle einer Vertiefung (3c, 23c, 33c, 43c, 53c, 63c, 73c) gemessene Tiefe (t) einer Vertiefung bzw. die Höhe einer Erhöhung mindestens 20 % und beispielsweise mindestens 30 % der maximalen Wandstärke (w) des Mantels beträgt.

5. Implantat nach einem der Ansprüche 1 bis 4, dadurch gekennzeichnet, dass die Vertiefungen (3c, 23c, 33c, 43c, 53c, 63c, 73c) und/oder Erhöhungen die sie enthaltende Mantelfläche bezüglich einer glatten, kreiszylindrischen Schmiegefläche des hohlen, im allgemeinen zylindrischen Teils (3, 23, 33, 43, 53, 63, 73) um mindestens 50 % und beispielsweise um mindestens oder ungefähr 80 % vergrössern.

6. Implantat nach einem der Ansprüche 1 bis 5, dadurch gekennzeichnet, dass die Vertiefungen durch Rillen (3c, 23c, 33c, 43c, 53c, 63c, 73c) gebildet sind, deren eine Enden in die dem Pfeiler (5c, 25c, 35c, 45c, 55d, 65c, 75) abgewandte Endfläche (3a, 43a, 63a, 73a) des Sockels münden und deren andere Enden durch Endflächen (3h) begrenzt sind, die mit der Achse des Pfeilers einen Winkel bilden, beispielsweise in einem entlang der betreffenden Rille verlaufenden Schnitt gebogen sind und beispielsweise von der Achse eines die Rillen aufweisenden Teils (3, 23, 33, 43, 53, 63, 73) weg nach aussen verlaufen.

7. Implantat nach einem der Ansprüche 1 bis 6, dadurch gekennzeichnet, dass die Vertiefungen (3c, 23c, 33c, 43c, 53c, 63c, 73c) zusammen mit den sich dazwischen befindenden Erhöhungen eine wellenförmige Profilierung ergeben.

8. Implantat nach einem der Ansprüche 1 bis 7, dadurch gekennzeichnet, dass die Vertiefungen sowie die sich dazwischen befindenden Erhöhungen und die Übergänge zwischen den Vertiefungen und Erhöhungen in einem zur Pfeiler-Längsrichtung rechtwinkligen Schnitt stetig verrundet sind.

9. Implantat nach einem der Ansprüche 1 bis 8, dadurch gekennzeichnet, dass sein Pfeiler (5c, 25c, 35c, 45c, 55d, 65c, 75) und sein Sockel (7, 27, 37, 47, 57, 67, 73) starr und unlösbar miteinander verbunden sind, wobei das Implantat beispielsweise aus einem einstückigen Körper besteht.

10. Implantat nach einem der Ansprüche 1 bis 9, dadurch gekennzeichnet, dass der Sockel (73) ausschliesslich aus einem im allgemeinen hohlzylindrischen Teil besteht, der am Pfeilerseitigen Ende vorzugsweise durch eine Verjüngung mit dem Pfeiler (75) verbunden ist, die eine Verrundete Schulter bildet.

## Claims

1. Implant (1, 21, 31, 41, 51, 61, 71), for the fastening of a dental prosthesis (11, 101) to a jaw bone (9, 99), which displays a base (7, 27, 37, 47, 57, 67, 73) intended for insertion into the latter and at least one post (5c, 25c, 35c, 45c, 55d, 65c, 75) for the retention of the dental prosthesis, wherein the base displays at least one hollow, generally cylindrical part (3, 23, 33, 43, 53, 63, 73), which is open at its end remote from the post and the shell of which is provided with holes (3e, 23e, 33e, 43e, 53e, 63e, 73e), characterised thereby, that the hollow, generally cylindrical part (73) of the base or at least one of these parts (3, 23, 33, 43, 53, 63) is provided at its external surface with at least ten depressions (3c, 23c, 33c, 43c, 53c, 63c, 73c) and/or protrusions, which are distributed over its circumference and extend or are arranged along straight lines parallel to the axis of the post (5c, 25c, 35c, 45c, 55d, 65c, 75).

2. Implant according to claim 1, characterised thereby, that the or each part (3, 23, 33, 43, 53, 63, 73), which is provided with the depressions (3c, 23c, 33c, 43c, 53c, 63c, 73c) and/or protrusions of the named kind, displays at least fifteen and for example at most thirty depressions or protrusions distributed over its circumference.

3. Implant according to claim 1 or 2, characterised thereby, that the maximum wall thickness (w) of the shell amounts at most to 15 % of the maximum outside diameter of the shell.

4. Implant according to one of the claims 1 to 3, characterised thereby, that the depth (t), measured between a smooth, circularly cylindrical snugly fitting surface of the hollow, generally cylindrical part (3, 23, 33, 43, 53, 63, 73) and the lowest place of a depression (3c, 23c, 33c, 43c, 53c, 63c, 73c), of a depression or the height of a protrusion amounts at least to 20 % and for example at least to 30 % of the maximum wall thickness (w) of the shell.

5. Implant according to one of the claims 1 to

4, characterised thereby, that the depressions (3c, 23c, 33c, 43c, 53c, 63c, 73c) and/or protrusions increase the shell area containing them by at least 50 % and for example by at least or approximately 80 % with respect to a smooth, circularly cylindrical snugly fitting surface of the hollow, generally cylindrical part (3, 23, 33, 43, 53, 63, 73).

6. Implant according to one of the claims 1 to 5, characterised thereby, that the depressions are formed by grooves (3c, 23c, 33c, 43c, 53c, 63c, 73c), the one ends of which open into that end face (3a, 43a, 63a, 73a) of the base, which is remote from the post (5c, 25c, 35c, 45c, 55d, 65c, 75) and the other ends of which are bounded by end faces (3h), which form an angle with the axis of the post, are for example arcuate in a section extending along the groove concerned and extend for example outwards from the axis of a part (3, 23, 33, 43, 53, 63, 73) displaying the grooves.

7. Implant according to one of the claims 1 to 6, characterised thereby, that the depressions (3c, 23c, 33c, 43c, 53c, 63c, 73c) together with the protrusions disposed therebetween result in a sinuous profile.

8. Implant according to one of the claims 1 to 7, characterised thereby, that the depressions as well as the protrusions disposed therebetween and the transitions between the depressions and the protrusions are rounded steadily in a section at right angles to the longitudinal direction of the post.

9. Implant according to one of the claims 1 to 8, characterised thereby, that its post (5c, 25c, 35c, 45c, 55d, 65c, 75) and its base (7, 27, 37, 47, 57, 67, 73) are each rigidly and non-detachably connected with the other, wherein the implant for example consists of an integral body.

10. Implant according to one of the claims 1 to 9, characterised thereby, that the base (73) consists exclusively of a generally hollow cylindrical part which at the end facing the post is connected with the post (75) by a taper which forms a rounded shoulder.

## Revendications

1. Implant (1, 21, 31, 41, 51, 61, 71) pour la fixation d'une prothèse dentaire (11, 101) à un maxillaire (9, 99), possédant un socle (7, 27, 37, 47, 57, 67, 73) destiné à être mis en place dans l'os et au moins un pilier (5c, 25c, 35c, 45c, 55d, 65c, 75) pour supporter la prothèse dentaire, le socle comportant au moins une partie creuse (3, 23, 33, 43, 53, 63, 73), généralement cylindrique, qui est ouverte à son extrémité éloignée du pilier et dont la paroi latérale est pourvue de trous (3e, 23e, 33e, 43e, 53e, 63e, 73e), caractérisé en ce que la partie creuse (73), généralement cylindrique, du socle, ou au moins l'une desdites parties (3, 23, 33, 43, 53, 63) généralement cylindriques, est pourvue à sa surface externe d'au moins dix creux (3c, 23c, 33c, 43c, 53c, 63c, 73c) et/ou surélévations, répartis sur sa circonférence, qui s'étendent ou sont disposés suivant des droites parallèles à l'axe du pilier (5c, 25c, 35c, 45c, 55d, 65c, 75)

2. Implant selon la revendication 1, caractérisé en ce que la partie ou chaque partie (3, 23, 33, 43, 53, 63, 73), pourvue des creux (3c, 23c, 33c, 43c, 53c, 63c, 73c) et/ou surélévations du type mentionné, présente au moins quinze et tout au plus trente, par exemple, creux ou surélévations répartis sur sa circonférence.

3. Implant selon la revendication 1 ou 2, caractérisé en ce que l'épaisseur (w) maximale de la paroi latérale correspond tout au plus a 15 % du diamètre extérieur (D) maximal de la paroi latérale.

4. Implant selon une des revendications 1 à 3, caractérisé en ce que la profondeur (t) d'un creux, mesurée entre une surface de contact lisse, de forme cylindrique circulaire, de la partie généralement cylindrique (3, 23, 33, 43, 53, 63, 73) et le vint le plus profond d'un creux (3c, 23c, 33c, 43c, 53c, 63c, 73c), respectivement la hauteur d'une surélévation, correspond au moins à 20 %, par exemple à 30 % au moins de l'épaisseur (w) de la paroi latérale.

5. Implant selon une des revendications 1 à 4, caractérisé en ce que les creux (3c, 23c, 33c, 43c, 53c, 63c, 73c) et/ou les surélévations augmentent d'au moins 50 %, par exemple d'au moins ou d'environ 80 %, ta surface latérale qui contient ces creux ou ces surélévations, par rapport à une surface de contact lisse, de forme cylindrique circulaire, de la partie creuse généralement cylindrique (3, 23, 33, 43, 53, 63, 73).

6. Implant selon une des revendications 1 à 5, caractérisé en ce que les creux sont constitués par des rainures (3c, 23c, 33c, 43c, 53c, 63c, 73c) dont les extrémités d'un côté aboutissent dans la face terminale (3a, 43a, 63a, 73a) éloignée du pilier (5c, 25c, 35c, 45c, 55d, 65c, 75) du socle et dont les autres extrémités sont délimitées par des surfaces d'extrémité (3h) qui forment un angle avec l'axe du pilier, sont courbes, par exemple dans une coupe longitudinale de la rainure concernée, et s'étendent vers l'extérieur, par exemple à partir de l'axe de la partie (3, 23, 33, 43, 53, 63, 73) présentant les rainures.

7. Implant selon une des revendications 1 à 6, caractérisé en ce que les creux (3c, 23c, 33c, 43c, 53c, 63c, 73c) forment un profil ondulé avec les surélévations situées entre eux.

8. Implant selon une des revendications 1 à 7, caractérisé en ce que les creux, de même que les surélévations situées entre eux et les transitions entre les creux et les surélévations, sont arrondis de façon continue dans une coupe prise perpendiculairement à l'axe longitudinal du pilier.

9. Implant selon une des revendications 1 à 8, caractérisé en ce que son pilier (5c, 25c, 35c, 45c, 55d, 65c, 75) et son socle (7, 27, 37, 47, 57, 67, 73) sont reliés rigidement et de façon indétachable l'un à l'autre, l'implant étant constitué, par exemple, d'une pièce d'un seul tenant.

10. Implant selon une des revendications 1 à 9, caractérisé en ce que le socle (73) est formé exclusivement d'une partie, généralement de forme cylindrique creuse, dont l'extrémité côté pilier est reliée au pilier (75), de préférence par un rétrécissement formant un épaulement arrondi.

Fig.1

Fig.2

Fig.3

0 139 253

9e 9 9e

9d 9c 9d

**Fig. 4**

5a 9b 9

3 9e 9a 9e 3

1 5c

**Fig. 5**

Fig. 6

Fig. 7

Fig. 8

Fig.9

Fig.10

7

Fig.11

Fig.12

Fig. 13

Fig. 14

Fig. 15

Fig. 16

Fig. 17